# DEMANDE DE BREVET EUROPEEN

(11) **EP 2 058 249 A1**
(43) Date de publication de la demande: **13.05.2009**
(21) Numéro de dépôt: 08167393.1
(22) Date de dépôt: 23.10.2008
(51) Int. Cl.: B65G 39/12, B65G 15/62

(54) **Station de support pour une bande de convoyage avec démontage des rouleaux facilités**

(30) Priorité: 06.11.2007 FR 0758814
(71) Demandeur: Brunone, René, 27950 Saint Marcel (FR)
(72) Inventeur: Brunone, René, 27950 Saint Marcel (FR)
(74) Mandataire: Blot, Philippe Robert Emile

(57) **Abrégé**

Station de support pour une bande de convoyage, la station (1) comprenant :
- un châssis (5) ;
- au moins un rouleau (15, 17) de support d'une zone de la bande de convoyage, le ou chaque rouleau (15, 17) étant libre en rotation par rapport au châssis (5) autour d'un axe;
- pour chaque rouleau (15, 17), des moyens (23) de liaison amovible de l'axe au châssis (5) ;

**caractérisée en ce que** les moyens (23) de liaison de chaque axe au châssis (5) comprennent au moins un logement (27) ménagé dans le châssis (5), le ou chaque logement (27) étant délimité dans un plan perpendiculaire à l'axe (21) par un bord périphérique ouvert dans une direction sensiblement parallèle à ladite zone de bande supportée par le rouleau (15, 17) en vue de permettre l'engagement de l'axe dans le logement (27).

## Description

La présente invention concerne en général une station de support pour une bande de convoyage.

Plus précisément, l'invention concerne une station de support pour une bande de convoyage, la station comprenant :
- un châssis ;
- au moins un rouleau de support d'une zone de la bande de convoyage, le ou chaque rouleau étant libre en rotation par rapport au châssis autour d'un axe ;
- pour chaque rouleau, des moyens de liaison amovible de l'axe au châssis.

Périodiquement, les rouleaux de support doivent être démontés du châssis, en vue de leur maintenance ou de leur remplacement. Cette opération est généralement longue et complexe, et nécessite la dépose de plusieurs éléments de la station, ainsi que le soulèvement de la bande.

Dans ce contexte, l'invention vise à proposer une station de support avec des rouleaux qui soient plus faciles à démonter.

A cette fin, l'invention porte sur une station de support du type précité, caractérisée en ce que les moyens de liaison de chaque axe au châssis comprennent au moins un logement ménagé dans le châssis, le ou chaque logement étant délimité dans un plan perpendiculaire à l'axe par un bord périphérique ouvert dans une direction sensiblement parallèle à ladite zone de bande supportée par le rouleau en vue de permettre l'engagement de l'axe dans le logement.

La station peut également présenter une ou plusieurs des caractéristiques ci-dessous, considérées individuellement ou selon toutes les combinaisons techniquement possibles :
- les moyens de liaison de chaque axe au châssis comprennent deux logements ménagés dans le châssis et disposés de part et d'autre du rouleau suivant la direction de l'axe, chaque logement étant délimité dans un plan perpendiculaire à l'axe par un bord périphérique ouvert dans une direction sensiblement parallèle à ladite zone de bande supportée par le rouleau en vue de permettre l'engagement de l'axe dans le logement.
- les bords périphériques des deux logements sont ouverts dans la même direction.
- le logement présente perpendiculairement à l'axe une section interne sensiblement circulaire, l'axe étant engagé dans le logement par un tronçon présentant une section droite s'inscrivant dans ladite section interne circulaire.
- la section droite dudit tronçon de l'axe présente une pluralité de zones arquées s'inscrivant dans ladite section interne circulaire et une pluralité de méplats reliant les zones arquées entre elles.
- ledit tronçon de l'axe est susceptible d'occuper dans le logement une première position dans laquelle le tronçon est susceptible d'être dégagé hors du logement en translation à travers une zone ouverte du bord périphérique du logement, et une seconde position dans laquelle le tronçon est bloqué en translation à travers ladite zone ouverte.
- le tronçon est déplacé entre ses première et seconde positions par rotation de l'axe sur lui-même.
- les moyens de liaison de l'axe au châssis comprennent des moyens de verrouillage du tronçon en seconde position.
- les moyens de verrouillage du tronçon en seconde position comprennent au moins une patte élastique de blocage liée à l'axe en rotation autour de lui-même, la patte comprenant un relief de blocage susceptible, en seconde position du tronçon, de coopérer avec un trou de blocage ménagé dans le châssis en vue de bloquer le tronçon en rotation par rapport au logement.
- la patte est amovible de l'axe.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue en élévation, de face, d'une station de support conforme à l'invention portant une bande transporteuse ;
- la figure 2 est une vue en perspective de la station de la figure 1, la bande transporteuse n'étant pas représentée ;
- la figure 3 est une vue en perspective d'une extrémité latérale de la station de support des figures 1 et 2 montrant un rouleau prêt à être monté sur la station ;
- la figure 4 est une vue de côté montrant le rouleau de la figure 3 après fixation sur le châssis ;
- la figure 5 est une vue en perspective du rouleau de la figure 3, de son axe et de ses pattes de blocage ;
- la figure 6 est une vue en perspective d'une des pattes de blocage du rouleau de la figure 5 ; et
- la figure 7 est une vue de côté de la patte de la figure 6.

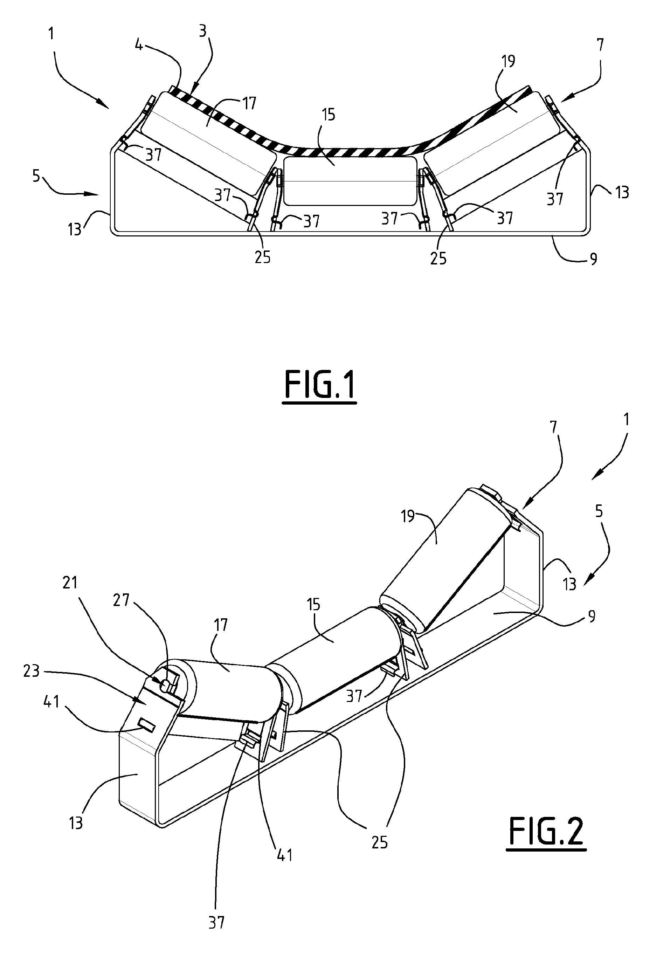

La station de support 1 représentée sur la figure 1 est destinée à faire partie d'un convoyeur à bande, prévu par exemple pour le transport de minerai concassé issu d'une carrière. Le convoyeur comporte une bande transporteuse 3 repliée en boucle et engagée à ses deux extrémités autour de rouleaux de retournement non représentés. L'un des deux rouleaux est moteur pour assurer l'entraînement de la bande 3, définissant ainsi le côté amont de la bande. La boucle est ainsi divisée en un tronçon 4 de transport du minerai et un tronçon de retour (non représenté).

La bande 3, le long du tronçon de transport 4, est supportée sur sa longueur par plusieurs stations identiques à la station 1, assurant le support et le guidage de la bande 3.

Comme le montre la figure 1, chaque station 1 comprend un châssis métallique d'appui 5, et un berceau 7 de support et de guidage de la bande 3. Le châssis 5 comprend essentiellement une poutre transversale 9, et deux montants 13, de chaque côté de la bande. La poutre transversale 9 relie les deux montants 13. Le châssis 5 repose sur le sol par l'intermédiaire d'une structure d'appui non représentée, par exemple des pieds. Le tronçon de retour de la bande passe par exemple sous la poutre 9.

Le berceau de support 7 présente une forme d'auge. II comporte trois rouleaux 15, 17, 19 disposés sensiblement dans un même plan vertical. Le rouleau central 15 est sensiblement horizontal. Les rouleaux latéraux 17 et 19 sont inclinés vers le rouleau central 15.

Chaque rouleau 15, 17, 19 supporte une zone de la bande de convoyage. Chacun des rouleaux 15, 17, 19 est libre en rotation par rapport au châssis autour d'un axe respectif 21.

Par ailleurs, la station comprend des moyens 23 de liaison amovible de chacun des axes 21 au châssis 5, qui font spécifiquement l'objet de l'invention. De manière à supporter les rouleaux, le châssis 5 comporte deux fers 25 pliés en U soudés sur la poutre 9. Le rouleau 15 est monté entre les deux fers en U 25. Les rouleaux latéraux 17 et 19 sont chacun montés entre un montant 13 et un fer 25.

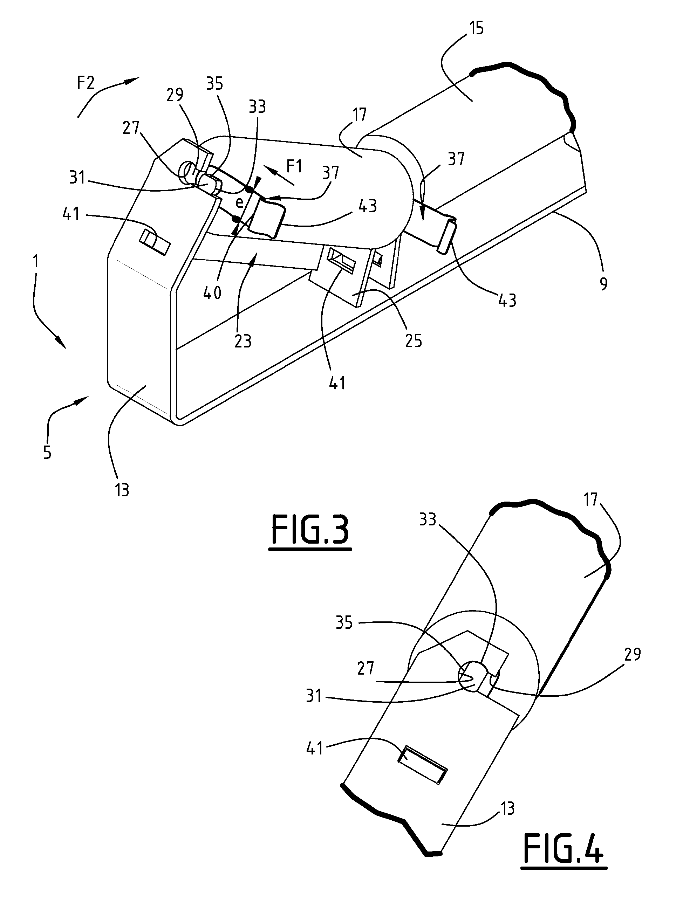

Comme visible sur la figure 3, les moyens 23 de liaison de chaque axe au châssis comprennent deux logements 27 ménagés dans le châssis et disposés de part et d'autre du rouleau monté autour de l'axe. Par exemple, pour chaque rouleau latéral 17/19, l'un des logements 27 est ménagé dans le montant 13, et l'autre dans le fer 25. Pour le rouleau central 15, les logements 27 sont ménagés dans les deux fers 25.

Pour chaque axe, les deux logements sont disposés en regard l'un de l'autre. Chaque logement traverse le montant 13 ou le fer 25, selon les cas, sur toute son épaisseur.

Chaque logement 27 est délimité, dans un plan perpendiculaire à l'axe correspondant, par un bord périphérique circulaire présentant un secteur ouvert 29. Les deux logements 27 correspondant à un même axe 21 sont ouverts suivant une même direction, cette direction étant sensiblement parallèle à la zone de la bande 3 supportée par le rouleau correspondant, de manière à permettre l'engagement de l'axe 21 du rouleau dans les deux logements 27 par un mouvement parallèle à ladite zone de la bande. Cette direction sera appelée direction d'engagement dans la suite de la description et est symbolisée par la flèche F1 de la figure 3.

Comme visible sur la figure 4, chaque logement 27 présente, perpendiculairement à l'axe 21 correspondant, une section interne droite sensiblement circulaire.

Par ailleurs, l'axe 21 présente des parties d'extrémité 31 en saillie par rapport au rouleau, ces parties étant susceptibles d'être engagées dans les logements 27. Les parties d'extrémité 31 présentent, perpendiculairement à l'axe, une section droite délimitées par deux zones en arc de cercle 33 opposées, reliées par deux méplats 35 opposés l'un à l'autre. Les deux zones arquées 33 s'inscrivent sur un cercle de diamètre sensiblement égal au diamètre interne du logement 27. Les deux méplats 35 sont parallèles l'un à l'autre et sont séparés par un écartement e inférieur au diamètre interne du logement 27.

En revanche, l'écartement e entre les méplats 35 est inférieur ou égal à l'écartement entre les bords opposés de la zone ouverte 29 du logement.

Ainsi, comme le montrent les figures 3 et 4, chaque partie d'extrémité 31 de l'axe est susceptible d'occuper dans le logement correspondant une première position dans laquelle ladite partie d'extrémité est susceptible d'être dégagée hors du logement en translation à travers la zone ouverte 29, et une seconde position dans laquelle la partie d'extrémité est bloquée en translation à travers la zone ouverte 29.

La partie d'extrémité 31 se déplace entre ses première et seconde positions par rotation de l'axe sur lui-même.

La seconde position est représentée sur la figure 4. Les méplats 35 sont alors sensiblement perpendiculaires à la direction d'engagement de l'axe à travers les ouvertures 29. Dans la première position au contraire, les méplats 35 sont sensiblement parallèles à la direction d'engagement des parties d'extrémité 31. Les parties d'extrémité passent d'une position à une autre par une rotation de 90° environ.

Par ailleurs, les moyens de liaison 23 de chaque axe au châssis comprennent des moyens 37 de verrouillage de chaque partie d'extrémité 31 de l'axe dans sa seconde position.

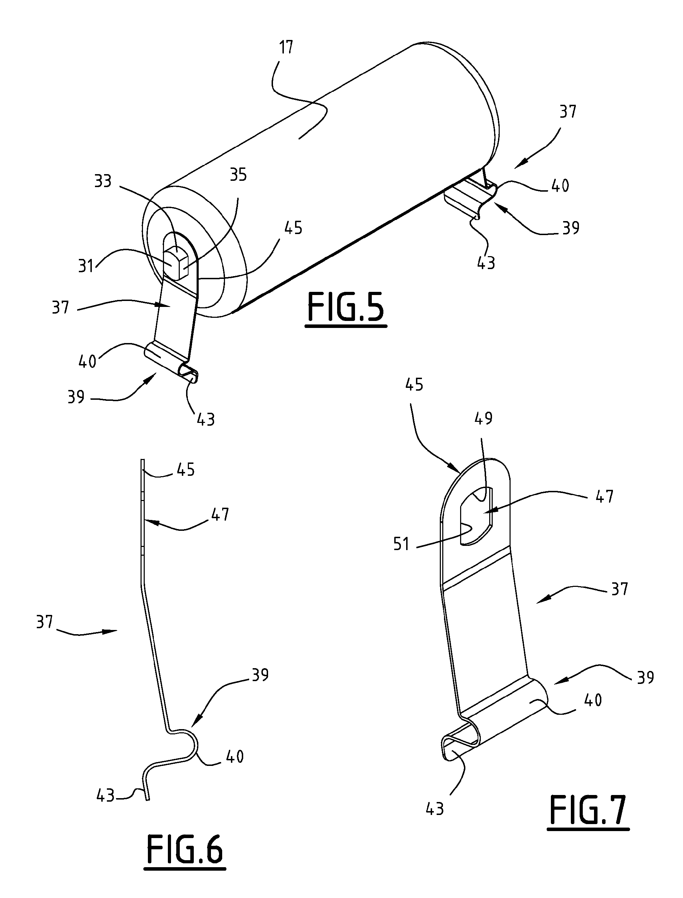

Ces moyens 37 comprennent typiquement une patte élastique, représentée sur les figures 5 à 7. La patte 37 est une tige métallique plate dont une extrémité 39 est pliée de manière à créer un relief de blocage 40 apte à coopérer avec un trou de blocage 41 ménagé soit dans le montant 13 soit dans le fer 25 du châssis. L'extrémité 39 est pliée approximativement en S, de manière à créer, d'un premier côté de la patte 37, une bosse 40 formant le relief de blocage, prolongée par une extrémité libre 43 de manoeuvre de la patte, en saillie d'un côté de la patte 37 opposé à la bosse 40.

La partie d'extrémité 45 de la patte opposée à la bosse 40 est percée d'un orifice 47 de forme conjuguée à la section de la partie d'extrémité 31 de l'axe. L'orifice 47 est donc délimité par deux bords arqués 49 s'inscrivant sur un même cercle reliés par deux méplats 51 présentant entre eux un écartement sensiblement égal à e. Comme le montre la figure 5, une patte 37 est susceptible d'être montée sur chacune des parties d'extrémité 31 de l'axe. La partie 31 est engagée à cet effet dans l'orifice 47, les bords 49 venant s'adapter le long des bords arqués 33 de la partie d'extrémité, et les méplats 51 venant s'adapter le long des méplats 35 de la partie d'extrémité.

Quand la partie d'extrémité 31 est engagée dans l'orifice 47, la patte 37 et l'axe 21 sont liés en rotation quand l'axe pivote sur lui-même.

Le procédé de montage et de démontage d'un rouleau, par exemple le rouleau latéral 17, sur le châssis va maintenant être détaillé.

A l'état initial, on considère que le rouleau 17 est séparé du châssis 5.

Deux pattes 37 sont d'abord montées sur les deux parties d'extrémité 31 de l'axe du rouleau 17. Pour ce faire, les parties d'extrémité 31 sont engagées dans les orifices 47 des pattes. Puis, comme le montre la figure 3, le rouleau muni des pattes 37 est approché du châssis. Le rouleau est orienté de telle sorte que les méplats 35 des parties d'extrémité de l'axe soient sensiblement parallèles à la direction d'engagement de l'axe dans les logements 27.

Puis, on engage les parties d'extrémité 31 de l'axe dans les logements 27, par un mouvement de translation selon la direction d'engagement F1, cette direction d'engagement étant sensiblement parallèle à la zone de la bande 3 normalement supportée par le rouleau.

Les parties d'extrémité 31 pénètrent alors dans les logements 27, les pattes 37 venant s'insérer entre le rouleau et le montant 13 ou le fer 25.

On fait ensuite pivoter l'axe 21 sur lui-même, de 90°, dans un sens représenté par la flèche F2 de la figure 3.

Les parties d'extrémité 31 pivotent à l'intérieur des logements 27, et passent ainsi de leur première position à leur seconde position. A la fin du mouvement, les méplats 35 sont perpendiculaires à la direction d'engagement. Les pattes 37 sont entraînées en rotation avec l'axe 21, par coopération de formes entre les parties d'extrémité 31 et les orifices 47.

Dans la seconde position des parties d'extrémité 31, les bosses 40 des pattes 37 viennent se loger élastiquement à l'intérieur des trous 41. Les pattes 37 et l'axe 21 sont alors bloqués en rotation autour dudit axe 21. Le montage du rouleau est alors terminé.

Le démontage du rouleau est effectué suivant une procédure exactement inverse.

Les bosses 40 des pattes sont d'abord désengagées des trous 41. Pour ce faire, un utilisateur saisit les extrémités 43 des pattes, et sollicite la patte en flexion élastique jusqu'à ce que la bosse 40 soit dégagée du trou 41. Puis, l'utilisateur fait pivoter l'axe 21 sur lui-même pour faire passer les parties d'extrémité 31 de leur seconde position à leur première position. Pour ce faire, l'axe 21 doit effectuer un quart de tour en rotation en sens inverse de la flèche F2 de la figure 3. Quand les parties d'extrémité 31 ont atteint leur première position, ces parties d'extrémité peuvent être dégagées des logements 27 suivant un mouvement de translation en sens inverse de la flèche F1 de la figure 3. Le rouleau est alors séparé du châssis 5.

La station de support décrite ci-dessus présente de multiples avantages.

Du fait que les moyens de liaison de chaque axe au châssis comprennent au moins un logement ménagé dans le châssis, le ou chaque logement étant délimité dans un plan perpendiculaire à l'axe par un bord périphérique ouvert dans une direction sensiblement parallèle à la zone de bande supportée par le rouleau, il est possible de monter et démonter le rouleau suivant un mouvement sensiblement parallèle à la zone de la bande de convoyage supportée par le rouleau. Ainsi, il n'est pas nécessaire de soulever la bande pour démonter le rouleau. L'opération de démontage est considérablement simplifiée, et un gain de temps important est ainsi réalisé.

Par ailleurs, l'axe peut être placé facilement, par une simple rotation sur lui-même, dans une position n'autorisant pas le dégagement de l'axe hors des logements par simple translation à travers la zone ouverte du bord périphérique du logement.

Par ailleurs, une patte permet de bloquer l'axe dans cette position de manière très simple, la patte étant entraînée avec l'axe et le blocage étant obtenu automatiquement par engagement d'un relief dans un trou du châssis. Le déblocage est également simple et rapide, puisqu'il suffit de solliciter la patte élastiquement de manière à dégager le relief hors du trou.

Les avantages mentionnés sont obtenus de manière simple et économique.

La station de support peut présenter de multiples variantes.

Ainsi, elle peut comporter un ou plusieurs rouleaux, ces rouleaux étant alignés ou non.

Chaque axe peut être lié au châssis par un seul logement présentant un bord périphérique avec une zone ouverte, l'autre extrémité de l'axe étant engagée dans un logement dont le bord périphérique est entièrement fermé. Dans ce cas, on engage d'abord un première extrémité de l'axe dans le logement fermé, puis on engage l'autre extrémité de l'axe dans le logement ouvert à travers la zone ouverte.

Au cas où les moyens de liaison de l'axe au châssis comportent deux logements dont le bord périphérique présente une zone ouverte, ces zones ouvertes ne sont pas nécessairement orientées dans la même direction. Ces zones ouvertes peuvent par exemple être orientées dans deux directions opposées, l'axe étant engagé dans les logements suivant un mouvement comportant un pivotement.

Les parties d'extrémité de l'axe peuvent présenter toute forme de section, sous réserve de pouvoir tourner à l'intérieur des logements correspondants. Ainsi, chaque partie d'extrémité peut présenter une section avec un seul méplat, ou avec trois méplats ou plus. De même, chaque partie d'extrémité peut présenter un seul secteur arqué, ou trois secteurs arqués, ou plus.

Dans une variante non préférée de l'invention, les parties d'extrémité de l'axe peuvent être bloquées en translation à travers la zone ouverte des bords périphériques des logements non pas du fait de leur forme, mais par des moyens mécaniques tels que des vis, des clavettes ou des goupilles. Dans ce cas, la forme des sections du logement et de l'axe sont indifférentes.

Par ailleurs, les parties d'extrémité de l'axe peuvent être bloquées après rotation dans leur seconde position, c'est-à-dire dans la position dans laquelle les parties d'extrémité de l'axe sont bloquées en translation à travers les zones ouvertes des bords périphériques, par des moyens différents des pattes illustrées sur les figures 5 et 7. Ces moyens peuvent être des vis, des clavettes, des goupilles, etc....

En variante, les rouleaux peuvent être montés tous sur un même axe. Dans ce cas, les moyens de liaison de l'axe au châssis peuvent ne comporter que deux logements, ménagés dans les deux montants 13. Les moyens de liaison peuvent également comporter d'autres logements, ménagés dans les fers en U, dans lesquels sont engagées des parties courantes de l'axe.

## Revendications

**1.** Station de support pour une bande (3) de convoyage, la station (1) comprenant :
- un châssis (5) ;
- au moins un rouleau (15, 17, 19) de support d'une zone de la bande de convoyage (3), le ou chaque rouleau (15, 17, 19) étant libre en rotation par rapport au châssis (5) autour d'un axe (21) ;
- pour chaque rouleau (15, 17, 19), des moyens (23) de liaison amovible de l'axe (21) au châssis (5) ;
**caractérisée en ce que** les moyens (23) de liaison de chaque axe (21) au châssis (5) comprennent au moins un logement (27) ménagé dans le châssis (5), le ou chaque logement (27) étant délimité dans un plan perpendiculaire à l'axe (21) par un bord périphérique ouvert dans une direction sensiblement parallèle à ladite zone de bande (3) supportée par le rouleau (15, 17, 19) en vue de permettre l'engagement de l'axe (21) dans le logement (27), le logement (27) présentant perpendiculairement à l'axe (21) une section interne sensiblement circulaire, l'axe (21) étant engagé dans le logement par un tronçon (31) présentant une section droite s'inscrivant dans ladite section interne circulaire, et la section droite dudit tronçon (31) de l'axe (21) présente une pluralité de zones arquées (33) s'inscrivant dans ladite section interne circulaire et une pluralité de méplats (35) reliant les zones arquées (33) entre elles.

**2.** Station de support selon la revendication 1, **caractérisée en ce que** les moyens (23) de liaison de chaque axe (21) au châssis (5) comprennent deux logements (27) ménagés dans le châssis (5) et disposés de part et d'autre du rouleau (15, 17, 19) suivant la direction de l'axe (21), chaque logement (27) étant délimité dans un plan perpendiculaire à l'axe (21) par un bord périphérique ouvert dans une direction sensiblement parallèle à ladite zone de bande (3) supportée par le rouleau (15, 17, 19) en vue de permettre l'engagement de l'axe (21) dans le logement (27).

**3.** Station de support selon la revendication 2, **caractérisée en ce que** les bords périphériques des deux logements (27) sont ouverts dans la même direction.

**4.** Station de support selon l'une quelconque des revendications 1 à 3, **caractérisée en ce que** ledit tronçon (31) de l'axe (21) est susceptible d'occuper dans le logement (27) une première position dans laquelle le tronçon (31) est susceptible d'être dégagé hors du logement (27) en translation à travers une zone ouverte (29) du bord périphérique du logement (27), et une seconde position dans laquelle le tronçon (31) est bloqué en translation à travers ladite zone ouverte (29).

**5.** Station de support selon la revendication 4, **caractérisée en ce que** le tronçon (31) est déplacé entre ses première et seconde positions par rotation de l'axe (21) sur lui-même.

**6.** Station de support selon la revendication 4 ou 5, **caractérisée en ce que** les moyens (23) de liaison de l'axe (21) au châssis (5) comprennent des moyens (37) de verrouillage du tronçon (31) en seconde position.

**7.** Station de support selon la revendication 6, **caractérisée en ce que** les moyens de verrouillage du tronçon (31) en seconde position comprennent au moins une patte (37) élastique de blocage liée à l'axe (21) en rotation autour de lui-même, la patte (37) comprenant un relief (40) de blocage susceptible, en seconde position du tronçon (31), de coopérer avec un trou (41) de blocage ménagé dans le châssis (5) en vue de bloquer le tronçon (31) en rotation par rapport au logement (27).

**8.** Station de support selon la revendication 7, **caractérisée en ce que** la patte (37) est amovible de l'axe (21).
